# EUROPÄISCHE PATENTSCHRIFT

(11) **EP 4 245 577 B1**
(45) Veröffentlichungstag und Bekanntmachung des Hinweises auf die Patenterteilung: **23.07.2025**
(21) Anmeldenummer: 23160922.3
(22) Anmeldetag: 09.03.2023
(51) Int. Cl.: B60C 23/00, B60C 23/04, B60C 23/06

(54) **VORRICHTUNG ZU EINEM ÜBERWACHEN EINES REIFENDRUCKS**
DEVICE FOR MONITORING A TYRE PRESSURE
DISPOSITIF DE SURVEILLANCE DE LA PRESSION D'UN PNEUMATIQUE

(30) Priorität: 14.03.2022 DE 102022105899
(43) Veröffentlichungstag der Anmeldung: 20.09.2023
(73) Patentinhaber: KNORR-BREMSE Systeme für Nutzfahrzeuge GmbH, 80809 München (DE)
(72) Erfinder: JUNDT, Oliver, 74394 Hessigheim (DE)

(56) Entgegenhaltungen:
- EP-A2- 1 236 588
- DE-A1- 102019 211 839

## Beschreibung

Die vorliegende Erfindung bezieht sich auf eine Vorrichtung und ein Verfahren zum Überwachen eines Reifendrucks, und insbesondere auf eine Reifendrucküberwachung bei Nutzfahrzeugen.

Im Stand der Technik sind zwei Möglichkeiten verbreitet, um den Reifendruck zu erfassen. Direkt erfassende bzw. messende Reifendruckkontrollsysteme verwenden an jedem einzelnen Rad Druck- und Temperatursensoren. Diese werden üblicherweise auf der Felgenseite oder an einer Innenseite des Reifens befestigt und stehen in direktem Kontakt mit der Luft im jeweiligen Reifen. Druck und Temperatur werden in Echtzeit bestimmt und telemetrisch an ein Steuergerät im Nutzfahrzeug übertragen. Häufig wird dem Fahrer dabei ein Reifendruckwert für jeden einzelnen Reifen angezeigt.

Demgegegenüber basieren indirekt erfassende bzw. messende Reifendruckkontroll-systeme auf Änderungen an den Rädern oder in deren Verhalten. Sie bestimmen den Reifendruck nur mittelbar. Durch eine Änderung des Reifendrucks ändert sich insbesondere ein Abrollverhalten des Reifens; insbesondere kann sich die Drehzahl erhöhen, wenn sich ein Radius des Reifens mit abnehmendem Innendruck verringert. Indirekt messende Reifendruckkontrollsysteme nutzen daher Drehzahlsensoren, um solche Änderungen zu detektieren und daraus auf den Reifendruck rückzuschließen.

Das Dokument EP 1 236 588 A2 offenbart ein Reifendrucküberwachungssystem für ein Fahrzeug mit Drehzahlsensoren und einem Reifendruckmesssystem für einen absoluten Reifenfülldruck, das insbesondere an einer einfach bereiften ersten Achse und einer zwillingsbereiften zweiten Achse Drehzahlsensoren, und an der zwillingsbereiften zweiten Achse und einer zwillingsbereiften dritten Achse Reifendruckmessgeräte aufweisen kann.

Dokument DE 10 2019 211 839 A1 offenbart ein Reifendruckmessystem für zwillingsbereifte Achsen, das eine Kombination der Drücke in den Zwillingsreifen bestimmt.

Nachteile der direkt messenden Reifendruckkontrollsysteme bestehen in den Kosten, da zumindest ein Sensors für jeden Reifen erforderlich ist. Zudem werden die Sensoren in der Regel jeweils durch eine eigene Batterie mit Energie versorgt, was in vielen Fällen dazu führt, dass die Sensoren nach ca. fünf bis acht Jahren ersetzt werden müssen.

Indirekt messende Reifendruckkontrollsysteme sind in der Regel deutlich kostengünstiger als direkt messende Reifendruckkontrollsysteme, da sie im Fahrzeug auch zu anderen Zwecken vorhandene Bauteile (etwa die Drehzahlsensoren) nutzen und eine Wartung insbesondere der Reifen vereinfachen. Nachteile der indirekt messenden Reifendruckkontrollsysteme bestehen jedoch insbesondere in der reduzierten Genauigkeit der Druckbestimmung. Nutzfahrzeuge weisen zudem oft doppel- bzw. zwillingsbereifte Achsen auf, bei denen indirekt messende Reifendruckkontrollsysteme oft nicht zwischen den zwei (oder mehr) Reifen unterscheiden können.

Es besteht daher ein Bedarf an verbesserten, insbesondere kostengünstigeren und effizienteren Vorrichtungen zur Überwachung des Reifendrucks.

Erfindungsgemäß wird ein Teil der genannten Probleme durch eine Vorrichtung nach Anspruch 1, ein Nutzfahrzeug nach Anspruch 5 und ein Verfahren nach Anspruch 8 gelöst. Die abhängigen Ansprüche definieren weitere vorteilhafte Ausführungsformen der Gegenstände der unabhängigen Ansprüche.

Die vorliegende Erfindung bezieht sich auf eine Vorrichtung zum Überwachen eines Reifendrucks für ein Nutzfahrzeug, das sowohl eine zumindest zwillingsbereifte Achse mit einem ersten Reifen und einem zweiten Reifen als auch eine einfach bereifte Achse mit einem dritten Reifen aufweist. Unter einer zwillingsbereiften oder auch doppelt bereiften Achse soll hierbei eine Achse verstanden werden, bei der zwei Reifen auf zwei getrennten oder einer gemeinsamen Felge an einer Radnabe oder einer sonstigen Achsaufnahme montiert sind. Der erste und der zweite Reifen können somit insbesondere direkt nebeneinander angebracht sein. Die in analoger Weise bezeichnete einfach bereifte Achse kann auch einen Einzelreifen mit Überbreite (sog. Super-Single-Reifen) aufweisen.

Die Vorrichtung umfasst einen ersten Drucksensor, der ausgebildet ist, um einen ersten Druck in dem ersten Reifen zu messen, und einen zweiten Drucksensor, der ausgebildet ist, um einen zweiten Druck in dem zweiten Reifen zu messen. Der erste und der zweite Drucksensor können an einer Felgenseite oder an einer Innenseite des ersten bzw. des zweiten Reifens befestigt sein; sie stehen vorteilhafterweise in direktem Kontakt mit Luft in dem betreffenden Reifen.

Die Vorrichtung umfasst weiter einen Drehzahlsensor, der ausgebildet ist, eine Drehzahl des dritten Reifens bzw. eines entsprechenden Rades zu messen. Zudem umfasst die Vorrichtung ein erstes Steuermodul, das ausgebildet ist, um den ersten Druck und den zweiten Druck zu empfangen und zu überwachen, und ein zweites Steuermodul, das ausgebildet ist, um die Drehzahl zu empfangen, basierend auf der Drehzahl einen dritten Druck in dem dritten Reifen zu bestimmen und den dritten Druck zu überwachen.

Das Überwachen kann ein wiederholtes Messen des jeweiligen Drucks und/oder ein Vergleichen von durch das Messen gewonnenen Daten zu verschiedenen Zeiten oder mit Werten aus einer Tabelle oder einem sonstigen Profil oder Muster umfassen. Die Tabelle, das Profil oder das Muster kann dabei in dem betreffenden Steuermodul hinterlegt sein. Weiter kann das Überwachen eine Ausgabe eines Warnsignals an einen Fahrer oder an eine andere Komponente des Nutzfahrzeugs umfassen. Eine Warnung kann beispielsweise ausgegeben werden, wenn einer der Drücke oder eine Änderungsrate eines der Drücke einen Schwellenwert überschreitet und/oder einen Schwellenwert unterschreitet.

Die beiden Steuermodule können in unterschiedlichen elektronischen Steuereinheiten untergebracht sein, die auch zu unterschiedlichen Teilsystemen (z.B. Bremssystem, Lenksystem etc.) gehören können. Zu weiteren Einrichtungen des Nutzfahrzeugs gehören. Beispielsweise können das erste Steuermodul und/oder der erste und der zweite Drucksensor somit ausschließlich zur Überwachung des Reifendrucks vorgesehen, das zweite Steuermodul und/oder der Drehzahlsensor aber beispielsweise Teil eines Fahrstabilitätssystems sein, wobei das Fahrstabilitätssystem ausgebildet ist, um die Drehzahl auch anderweitig zu verwenden. Insbesondere kann das Fahrstabilitätssystem beispielsweise ein Antiblockiersystem, ein Antriebsschlupfregelsystem oder ein elektronisches Stabilitätsprogramm sein, dessen Funktion jeweils das Messen der Drehzahl durch den Drehzahlsensor voraussetzt bzw. vorsieht. Zwischen den Steuermodulen, insbesondere bei einer Ausführung in verschiedenen Steuereinheiten, kann eine Datenverbindung eingerichtet sein, über die Daten zu der Überwachung der jeweiligen Drücke ausgetauscht und/oder Warnungen koordiniert werden können.

Das Nutzfahrzeug kann natürlich weitere Reifen und auch weitere Achsen aufweisen, und die Vorrichtung kann entsprechende weitere Drucksensoren und weitere Drehzahlsensoren umfassen.

Insbesondere kann die zwillingsbereifte Achse einen weiteren ersten Reifen und einen weiteren zweiten Reifen tragen, die ebenfalls jeweils einen entsprechenden weiteren Drucksensor zum Messen eines weiteren ersten Drucks und eines weiteren zweiten Drucks aufweisen. Das erste Steuermodul kann ausgebildet sein, um den weiteren ersten und den weiteren zweiten Druck zu empfangen und zu überwachen. Weiter kann die einfach bereifte Achse auch einen weiteren dritten Reifen tragen, und die Vorrichtung kann einen weiteren Drucksensor umfassen, um eine entsprechende weitere Drehzahl des weiteren dritten Reifens zu messen. Das zweite Steuermodul kann ausgebildet sein, um auch die weitere Drehzahl zu empfangen, aus der weiteren Drehzahl einen weiteren dritten Druck in dem weiteren dritten Reifen zu bestimmen und den weiteren dritten Druck zu überwachen.

Entsprechend kann das Nutzahrzeug auch eine oder mehrere weitere zwillingsbereifte Achsen und/oder weitere einfachbereifte Achsen aufweisen, deren Räder bzw. Reifen in entsprechender Weise mit dem ersten und dem zweiten Steuermodul verbunden sind, so dass die Vorrichtung auch Drücke in den Reifen an diesen weiteren Achsen überwachen kann.

Dabei können die verschiedenen Reifen auch auf verschiedenen Seiten des Nutzfahrzeugs angebracht sein.

Die vorangehend dargestellte Möglichkeit der Erweiterung der Vorrichtung bezieht sich selbstredend auch auf alle nachfolgend dargestellten Aspekte und optionalen Ausführungen der Vorrichtung sowie auch entsprechender Verfahren.

Optional umfasst die Vorrichtung zumindest einen weiteren Drehzahlsensor, der ausgebildet ist, eine weitere Drehzahl eines Reifens bzw. Rads des Nutzfahrzeugs zu messen, wobei das zweite Steuermodul ausgebildet ist, um die weitere Drehzahl zu empfangen und den dritten Druck in dem dritten Reifen auch basierend auf der weiteren Drehzahl zu bestimmen. Die weitere Drehzahl kann dabei eine Drehzahl des ersten und/oder des zweiten Reifens bzw. Rads, aber auch eine Drehzahl eines anderen Reifens bzw. Rads des Nutzfahrzeugs sein. Insbesondere kann die zweite Steuereinheit ausgebildet sein, den dritten Druck durch einen Vergleich der Drehzahl des dritten Rads mit der weiteren Drehzahl zu bestimmen.

Optional sind das erste Steuermodul und das zweite Steuermodul in einer Steuereinheit zusammengefasst oder separat in verschiedenen Steuereinheiten untergebracht. Insbesondere kann die Steuereinheit ausgebildet sein, um den ersten und/oder den zweiten Druck telemetrisch zu empfangen. Die Steuereinheit kann weiter ausgebildet sein, um die Drehzahl beispielsweise über einen CAN-Bus des Nutzfahrzeugs abzufragen; der Drehzahlsensor kann auch Teil einer anderen Komponente (insbesondere etwa eines Fahrstabilitätssystems) des Nutzfahrzeugs sein.

Optional ist das erste Steuermodul ausgebildet, um den ersten Druck und den zweiten Druck zu einem kombinierten Druck zu kombinieren, und um den kombinierten Druck zu überwachen. Das Kombinieren kann beispielsweise eine Bildung eines arithmetischen Mittelwerts aus dem ersten Druck und dem zweiten Druck umfassen. Das Kombinieren kann aber auch auf einer anderen Funktion basieren, die einem Eingabewert für den ersten Druck und einem Eingabewert für den zweiten Druck einen Ausgabewert für den kombinierten Druck zuordnet.

Optional sind das erste Steuermodul und/oder das zweite Steuermodul ausgebildet, um das Überwachen basierend einem Schwellenwert des jeweiligen Drucks durchzuführen. Alternativ oder zusätzlich kann das Überwachen auch basierend auf einer zeitlichen Änderungsrate des jeweiligen Drucks erfolgen.

Das Überwachen kann ein regelmäßiges, kontinuierliches oder stichprobenartiges Vergleichen des jeweiligen Drucks oder einer zeitlichen Änderungsrate bzw. eines räumlichen Gradienten des jeweiligen Drucks mit einem oder mehreren Tabellenwerten oder einem sonstigen Muster oder Profil umfassen. Das Überwachen kann auch ein Vergleichen des ersten und des zweiten Drucks, des ersten und des dritten Drucks und/oder des zweiten und des dritten Drucks umfassen.

Ausführungsbeispiele beziehen sich auch auf ein Nutzfahrzeug, das eine zwillingsbereifte Achse mit einem ersten Reifen und einem zweiten Reifen sowie eine einfach bereifte Achse mit einem dritten Reifen umfasst, und das eine Vorrichtung zum Überwachen eines Reifendrucks der vorangehend beschriebenen Art aufweist.

Optional ist die zwillingsbereifte Achse dabei eine Antriebsachse des Nutzfahrzeugs. Die Antriebsachse kann insbesondere eine Hinterachse sein.

Optional ist die einfach bereifte Achse eine Vorderachse, eine Schubachse (push axle) oder eine Nachlaufachse (tag axle) des Nutzfahrzeugs.

Ausführungsbeispiele beziehen sich auch auf ein Verfahren zum Überwachen eines Reifendrucks für ein Nutzfahrzeug, das eine zwillingsbereifte Achse mit einem ersten Reifen und einem zweiten Reifen sowie eine einfach bereifte Achse mit einem dritten Reifen aufweist. Das Verfahren umfasst ein erstes Messen, nämlich ein Messen eines ersten Drucks in dem ersten Reifen, durch einen ersten Drucksensor. Das Verfahren umfasst weiter ein zweites Messen, nämlich ein Messen eines zweiten Drucks in dem zweiten Reifen, durch einen zweiten Drucksensor. Das Verfahren umfasst weiter ein drittes Messen, nämlich ein Messen einer Drehzahl des dritten Reifens, durch einen Drehzahlsensor. Weiter umfasst das Verfahren ein Bestimmen eines dritten Drucks, basierend auf der Drehzahl. Weiter umfasst das Verfahren ein Überwachen des ersten Drucks, des zweiten Drucks und des dritten Drucks.

Das erste Messen, das zweite Messen und das dritte Messen können zeitlich korreliert, z.B. gemeinsam in einem bestimmten Rhythmus oder in einer bestimmten Abfolge durchgeführt werden. Das erste und das zweite Messen können jeweils ein telemetrisches Übertragen von Messdaten umfassen. Das dritte Messen kann auch ein Abfragen eines Messwerts des dritten Drucks über einen CAN-Bus umfassen.

Ausführungsbeispiele beziehen sich auch auf ein computerlesbares Speichermedium, das z.B. in Form eines Softwarecodes oder einer Maschinensprache Befehle umfasst, die bei einer Ausführung durch eine datenverarbeitende Maschine diese dazu veranlassen, das vorangehend beschriebene Verfahren durchzuführen.

Wichtige Aspekte der vorgestellten Vorrichtung bzw. des vorgestellten Verfahrens können auch wie folgt zusammengefasst werden.

Um eine Reifendrucküberwachung (engl. tire pressure monitoring) durchzuführen, sind zwei Möglichkeiten bekannt: Mittels Drucksensoren im Rad oder über einen Raddrehzahlvergleich. Es hat sich ergeben, dass bei Nutzfahrzeugen, insbesondere bei schweren Nutzfahrzeugen, bei zwillingsbereiften Achsen die Traglast pro Reifen kleiner und Achslastschwankungen größer sein können als bei einzelbereiften Achsen (insbesondere bei einer einzelbereiften Vorderachse). Zudem kann bei einer Zwillingsbereifung ein Druckverlust in einem ersten Reifen durch Effekte des zweiten Reifens bzw. die Aufteilung der Traglast beeinflusst werden. Insgesamt hat sich gezeigt, dass die Reifendrucküberwachung über Raddrehzahlen für zwillingsbereifte Achsen nicht mit hoher Genauigkeit bzw. Sicherheit durchführbar ist.

Zwillingsbereifte Achsen können bei schweren Nutzfahrzeugen insbesondere im Fall der Antriebsachse auftreten. Die Reifendrucküberwachung mittels Drucksensoren ist allerdings teuer, insbesondere da Sensoren, Antennen und/oder Empfänger zusätzlich installiert werden müssen. Die vorgestellte Vorrichtung entspricht einem Mischverbau. Durch sie erfolgt an einfach bereiften Achsen (etwa einer Vorderachse, vielfach auch einer Push- und Tagaxle) die Reifendrucküberwachung über Raddrehzahlen. An zwillingsbereiften Achsen wird der Reifendruck durch die vorgestellte Vorrichtung über Sensoren erfasst und überwacht. Beide Überwachungen können in einer gemeinsamen Steuereinheit zusammen laufen.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Nutzfahrzeug mit einem Ausführungsbeispiel der Vorrichtung gemäß der vorliegenden Erfindung.
- Fig. 2: zeigt Schritte eines entsprechenden Verfahrens zum Überwachen eines Reifendrucks.

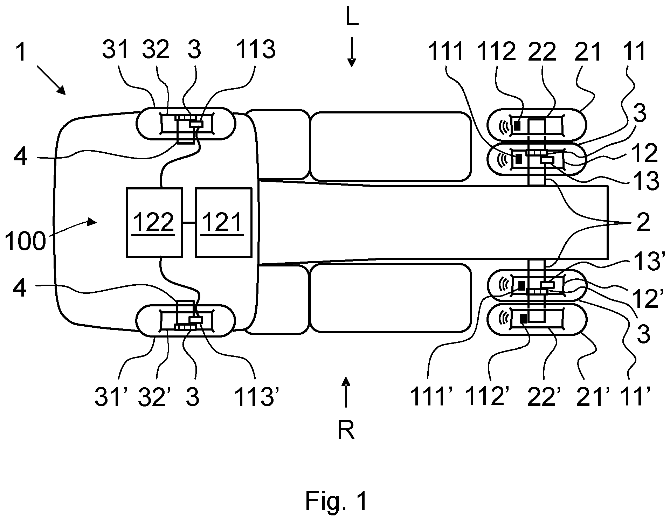

**Fig. 1** zeigt schematisch einen horizontalen Querschnitt durch ein Nutzfahrzeug 1 mit einer Vorrichtung 100 zu einem Überwachen eines Reifendrucks. Das Nutzfahrzeug 1 ist hier ein Zugfahrzeug eines Fahrzeuggespanns mit einer zwillingsbereiften Achse 2 und mit einer einfach bereiften Achse 4. Die zwillingsbereifte Achse 2 ist hier eine Antriebsachse des Nutzfahrzeugs 1, und die einfach bereifte Achse 4 ist eine Vorderachse des Nutzfahrzeugs 1.

Auf einer rechten Seite R des Nutzfahrzeugs 1 trägt die zwillingsbereifte Achse 2 ein Rad mit einem ersten Reifen 11 auf einer ersten Felge 12 und ein Rad mit einem zweiten Reifen 21 auf einer zweiten Felge 22. Die einfach bereifte Achse auf der rechten Seite R des Nutzfahrzeugs 1 trägt ein drittes Rad mit einem dritten Reifen 31 auf einer dritten Felge 32.

Die Vorrichtung 100 umfasst einen ersten Drucksensor 111, der ausgebildet ist, um einen ersten Druck in dem ersten Reifen 11 zu messen, und einen zweiten Drucksensor 112, der ausgebildet ist, um einen zweiten Druck in dem zweiten Reifen 21 zu messen. Der erste Drucksensor 111 und der zweite Drucksensor 112 sind jeweils ausgebildet, um den ersten bzw. den zweiten Druck telemetrisch zu übertragen. Die Drucksensoren 111, 112 können jeweils in einem Inneren des ersten Reifens 11 bzw. des zweiten Reifens 21, beispielsweise auf der ersten Felge 12 bzw. auf der zweiten Felge 22 oder auch direkt am ersten Reifen 11 bzw. am zweiten Reifen 21, angebracht sein.

Die zwillingsbereifte Achse 2 und die einfach bereifte Achse 4 weisen auf der rechten Seite R des Nutzfahrzeugs 1 jeweils ein Polrad 3 auf. Die Vorrichtung 100 umfasst einen Drehzahlsensor 113, der ausgebildet ist, eine Drehzahl des dritten Reifens 31 anhand des entsprechenden Polrads 3 auf der einfach bereiften Achse 4 zu messen. Im vorliegenden Ausführungsbeispiel ist auf der rechten Seite R des Nutzfahrzeugs 1 auch an der zwillingsbereiften Achse 2 ein Drehzahlsensor 13 montiert. Messdaten der Drehzahlsensoren 13, 113 können einer oder mehreren weiteren Einrichtungen des Nutzfahrzeugs 1 zur Verfügung gestellt werden; insbesondere können diese weiteren Einrichtungen beispielsweise ein Antiblockiersystem oder ein elektronisches Stabilitätsprogramm sein.

Die Vorrichtung 100 umfasst ein erstes Steuermodul 121, das ausgebildet ist, um den ersten Druck und den zweiten Druck zu empfangen und zu überwachen. Weiter umfasst die Vorrichtung 100 ein zweites Steuermodul 122, das ausgebildet ist, um die Drehzahl zu empfangen, aus der Drehzahl einen dritten Druck in dem dritten Reifen 31 zu bestimmen, und um den dritten Druck zu überwachen. Die beiden Steuermodule 121, 122 tauschen Daten aus und sind ausgebildet, um gemeinsam eine Warnung z.B. an einen Fahrer oder an eine andere Einrichtung im Nutzfahrzeug 1 auszugeben, wenn der erste, der zweite oder der dritte Druck unter oder über einem Schwellenwert liegen oder schnell abfallen.

Die Steuermodule 121, 122 können dabei in einer Steuereinheit integriert ausgeführt sein. Sie können allerdings auch Teile der weiteren Einrichtungen oder anderer Komponenten des Nutzfahrzeugs 1 sein. Insbesondere kann beispielsweise das zweite Steuermodul 122 Teil eines Antiblockiersystems oder eines elektronischen Stabilitätssystems sein. In anderen Ausführungsbeispielen kann das zweite Steuermodul 122 die Daten des Drehzahlsensors 113 auch lediglich über die weitere Einrichtung erhalten; insbesondere kann das zweite Steuermodul 122 somit die Drehzahl nur mittelbar von dem Drehzahlsensor 113 empfangen.

Die Vorrichtung 100 ist in gleicher Weise auch auf einer linken Seite L des Nutzfahrzeugs 1 ausgebildet. Dort umfasst das Nutzfahrzeug 1 an der zwillingsbereiften Achse 2 insbesondere einen ersten weiteren Reifen 11' und einen zweiten weiteren Reifen 21', und an der einfach bereiften Achse 4 einen dritten weiteren Reifen 31'. Die Vorrichtung 100 umfasst einen ersten weiteren Drucksensor 111', der ausgebildet ist, um einen ersten weiteren Druck in dem ersten weiteren Reifen 11' zu messen, und einen zweiten weiteren Drucksensor 112', der ausgebildet ist, um einen zweiten weiteren Druck in dem zweiten weiteren Reifen 21' zu messen. Der erste und der zweite weitere Druck werden dabei ebenfalls telemetrisch an das erste Steuermodul 121 übertragen. Weiter umfasst die Vorrichtung 100 einen weiteren Drehzahlsensor 113', der ausgebildet ist, eine weitere Drehzahl des dritten weiteren Reifens 31' zu messen. Die weitere Drehzahl wird ebenfalls an das zweite Steuermodul 122 übertragen. Die vorangehende Beschreibung für die rechte Seite R des Nutzfahrzeugs 1 kann auch für die linke Seite L des Nutzfahrzeugs 1 entsprechend zutreffend sein.

In weiteren Ausführungsbeispielen kann das Nutzfahrzeug 1 weitere einfach, doppel-(oder mehrfach) bereifte Achsen aufweisen, bei denen Drücke in entsprechenden Reifen entsprechend durch Umrechnung von Drehzahlen aus Drehzahlsensoren (bei einfach bereiften Achsen) bzw. durch direkte Druckmessung (bei zwillings- oder mehrfach bereiften Achsen) erfolgen.

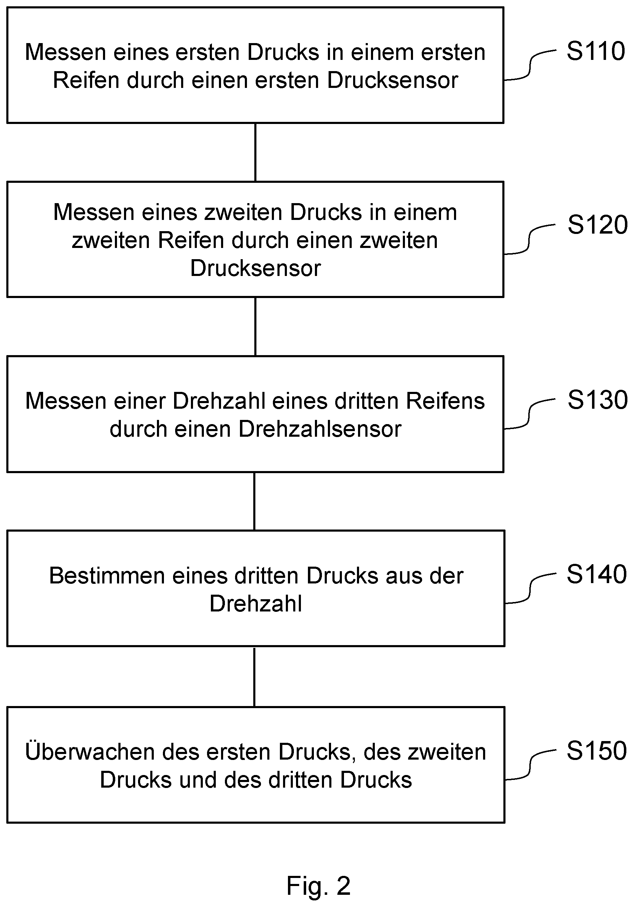

**Fig. 2** zeigt Schritte eines entsprechenden Verfahrens zum Überwachen eines Reifendrucks für ein Nutzfahrzeug 1, das eine zwillingsbereifte Achse 2 mit einem ersten Reifen 11 und einem zweiten Reifen 21, sowie eine einfach bereifte Achse mit einem dritten Reifen 31 aufweist. Das Verfahren umfasst ein erstes Messen S110, bei dem durch einen ersten Drucksensor 111 ein erster Druck bzw. Druckwert in dem ersten Reifen 11 bestimmt wird. Weiter umfasst das Verfahren ein zweites Messen S120, bei dem durch einen zweiten Drucksensor 112 ein zweiter Druck bzw. Druckwert in dem zweiten Reifen 21 bestimmt wird.

Weiter umfasst das Verfahren ein drittes Messen S130, bei dem durch einen Drehzahlsensor 113 eine Drehzahl des dritten Reifens 31 bestimmt wird. Das Verfahren umfasst zudem ein Bestimmen S140 eines dritten Drucks bzw. Druckwerts aus der Drehzahl, und ein Überwachen S150 des ersten Drucks, des zweiten Drucks und des dritten Drucks.

Die Schritte können in einer anderen als der hier dargestellten Abfolge durchgeführt werden. Insbesondere können auch Frequenzen, mit denen jeweils das erste Messen S110, das zweite Messen S120 und das dritte Messen S130 durchgeführt werden, voneinander verschieden sein.

### BEZUGSZEICHENLISTE

- 1: Nutzfahrzeug
- 2: zwillingsbereifte Achse
- 3: Polrad
- 4: einfach bereifte Achse
- 11, 11': erster Reifen, erster weiterer Reifen
- 12, 12': Felge des ersten Reifens bzw. des ersten weiteren Reifens
- 13, 13': Drucksensoren
- 21, 21': zweiter Reifen, zweiter weiterer Reifen
- 22, 22': Felge des zweiten Reifens bzw. des zweiten weiteren Reifens
- 31, 31': dritter Reifen, dritter weiterer Reifen
- 32, 32': Felge des dritten Reifens bzw. des dritten weiteren Reifens
- 100: Vorrichtung
- 111, 111': erster Drucksensor, erster weiterer Drucksensor
- 112, 112': zweiter Drucksensor, zweiter weiterer Drucksensor
- 113, 113': dritter Drucksensor, dritter weiterer Drucksensor
- 121: erstes Steuermodul
- 122: zweites Steuermodul

## Patentansprüche

1. Eine Vorrichtung (100) zu einem Überwachen eines Reifendrucks für ein Nutzfahrzeug (1), das eine zwillingsbereifte Achse (2) mit einem ersten Reifen (11, 11') und einem zweiten Reifen (21, 21') sowie eine einfach bereifte Achse (4) mit einem dritten Reifen (31) und einem weiteren dritten Reifen (31') aufweist, mit:
einen ersten Drucksensor (111, 111'), der ausgebildet ist, um einen ersten Druck in dem ersten Reifen (11, 11') zu messen;
einen zweiten Drucksensor (112, 112'), der ausgebildet ist, um einen zweiten Druck in dem zweiten Reifen (21, 21') zu messen;
einen Drehzahlsensor (113,), der ausgebildet ist, eine Drehzahl des dritten Reifens (31,) zu messen;
einen weiteren Drehzahlsensor (113'), der ausgebildet ist, eine Drehzahl des weiteren dritten Reifens (31') zu messen;
ein erstes Steuermodul (121), das ausgebildet ist, um den ersten Druck und den zweiten Druck zu empfangen und zu überwachen; **gekennzeichnet durch**
ein zweites Steuermodul (122), das ausgebildet ist, um die Drehzahl und die weitere Drehzahl zu empfangen, basierend nur auf der Drehzahl und der weiteren Drehzahl einen dritten Druck in dem dritten Reifen (31) zu bestimmen und den dritten Druck zu überwachen.

2. Die Vorrichtung (100) nach einem der vorhergehenden Ansprüche,
**dadurch gekennzeichnet, dass**
das erste Steuermodul (121) und das zweite Steuermodul (122) in einer Steuereinheit zusammengefasst sind oder in separate Steuereinheiten untergebracht sind.

3. Die Vorrichtung (100) nach einem der vorhergehenden Ansprüche,
**dadurch gekennzeichnet, dass**
das erste Steuermodul (121) ausgebildet ist, um den ersten Druck und den zweiten Druck zu einem kombinierten Druck zu kombinieren und den kombinierten Druck zu überwachen.

4. Die Vorrichtung (100) nach einem der vorhergehenden Ansprüche,
**dadurch gekennzeichnet, dass**
das erste Steuermodul (121) und/oder das zweite Steuermodul (122) ausgebildet sind, um das Überwachen basierend auf zumindest einem der folgenden durchzuführen:
- einem Schwellenwert,
- einer zeitlichen Änderungsrate
und bei Überschreiten vorbestimmter Werte eine Warnung auszugeben.

5. Ein Nutzfahrzeug (1), umfassend
eine zwillingsbereifte Achse (2) mit einem ersten Reifen (11, 11') und einem zweiten Reifen (21, 21'); und
eine einfach bereifte Achse (4) mit einem dritten Reifen (31) und einem weiteren dritten Reifen (31'),
**gekennzeichnet durch**
die Vorrichtung (100) nach einem der vorhergehenden Ansprüche.

6. Das Nutzfahrzeug (1) nach Anspruch 5,
**dadurch gekennzeichnet, dass**
die zwillingsbereifte Achse (2) eine Antriebsachse des Nutzfahrzeugs (1) ist.

7. Das Nutzfahrzeug (1) nach Anspruch 5 oder Anspruch 6,
**dadurch gekennzeichnet, dass**
die einfach bereifte Achse (2) eine Vorderachse, eine Schubachse oder eine Nachlaufachse des Nutzfahrzeugs (1) ist.

8. Ein Verfahren zum Überwachen eines Reifendrucks für ein Nutzfahrzeug (1), das eine zwillingsbereifte Achse (2) mit einem ersten Reifen (11, 11') und einem zweiten Reifen (21, 21') sowie eine einfach bereifte Achse (4) mit einem dritten Reifen (31) und einem weiteren dritten Reifen (31') aufweist, mit folgenden Schritten:
ein erstes Messen (S110), durch einen ersten Drucksensor (111, 111'), eines ersten Drucks in dem ersten Reifen (11, 11');
ein zweites Messen (S120), durch einen zweiten Drucksensor (112, 112'), eines zweiten Drucks in dem zweiten Reifen (21, 21');
ein drittes Messen (S130), durch einen Drehzahlsensor (113, 113'), einer Drehzahl des dritten Reifens (31) und einer weiteren Drehzahl des weiteren dritten Reifens (31');
**gekennzeichnet durch**:
ein Bestimmen (S140), basierend nur auf der Drehzahl und der weiteren Drehzahl, eines dritten Drucks; und
ein Überwachen (S150) des ersten Drucks, des zweiten Drucks und des dritten Drucks.

## Claims

1. Device (100) for monitoring a tire pressure for a utility vehicle (1), which has a dual-tired axle (2) with a first tire (11, 11') and a second tire (21, 21') as well as a single-tired axle (4) with a third tire (31) and a further third tire (31'), with:
a first pressure sensor (111, 111'), which is configured to measure a first pressure in the first tire (11, 11');
a second pressure sensor (112, 112'), which is configured to measure a second pressure in the second tire (21, 21');
a rotational speed sensor (113'), which is configured to measure a rotational speed of the third tire (31');
a further rotational speed sensor (113'), which is configured to measure a rotational speed of the further third tire (31');
a first control module (121), which is configured to receive and monitor the first pressure and the second pressure; **characterized by**
a second control module (122), which is configured to receive the rotational speed and the further rotational speed, to determine a third pressure in the third tire (31) based only on the rotational speed and the further rotational speed, and to monitor the third pressure.

2. Device (100) according to any one of the preceding claims, **characterized in that**
the first control module (121) and the second control module (122) are combined into one control unit or are accommodated in separate control units.

3. Device (100) according to any one of the preceding claims,
**characterized in that**
the first control module (121) is configured to combine the first pressure and the second pressure into a combined pressure and to monitor the combined pressure.

4. Device (100) according to any one of the preceding claims,
**characterized in that**
the first control module (121) and/or the second control module (122) are configured to perform the monitoring based on at least one of the following:
- a threshold value,
- a rate of change over time,
and to output a warning when predetermined values are exceeded.

5. Utility vehicle (1), comprising
a dual-tired axle (2) with a first tire (11, 11') and a second tire (21, 21'); and
a single-tired axle (4) with a third tire (31) and a further third tire (31'),
**characterized by**
the device (100) according to any one of the preceding claims.

6. Utility vehicle (1) according to claim 5,
**characterized in that**
the dual-tired axle (2) is a drive axle of the utility vehicle (1).

7. Utility vehicle (1) according to claim 5 or claim 6,
**characterized in that**
the single-tired axle (2) is a front axle, a pusher axle or a trailing axle of the utility vehicle (1).

8. Method for monitoring a tire pressure for a utility vehicle (1), which has a dual-tired axle (2) with a first tire (11, 11') and a second tire (21, 21') as well as a single-tired axle (4) with a third tire (31) and a further third tire (31'), with following steps:
a first measurement (S110), by a first pressure sensor (111, 111'), of a first pressure in the first tire (11, 11');
a second measurement (S120), by a second pressure sensor (112, 112'), of a second pressure in the second tire (21, 21');
a third measurement (S130), by a rotational speed sensor (113, 113'), of a rotational speed of the third tire (31) and a further rotational speed of the further third tire (31');
**characterized by**:
determining (S140) a third pressure, based only on the rotational speed and the further rotational speed; and
monitoring (S150) the first pressure, the second pressure and the third pressure.

## Revendications

1. Dispositif (100) de surveillance d'une pression pneumatique pour un véhicule utilitaire (1) qui présente un essieu (2) en montage jumelé avec un premier pneumatique (11, 11') et un deuxième pneumatique (21, 21') ainsi qu'un essieu (4) en montage simple avec un troisième pneumatique (31) et un autre troisième pneumatique (31'), avec :
un premier capteur de pression (111, 111') qui est conçu afin de mesurer une première pression dans le premier pneumatique (11, 11') ;
un second capteur de pression (112, 112') qui est conçu afin de mesurer une deuxième pression dans le deuxième pneumatique (21, 21') ;
un capteur de vitesse de rotation (113') qui est conçu afin de mesurer une vitesse de rotation du troisième pneumatique (31,) ;
un autre capteur de vitesse de rotation (113') qui est conçu afin de mesurer une vitesse de rotation de l'autre troisième pneumatique (31') ;
un premier module de commande (121) qui est conçu afin de recevoir et de surveiller la première pression et la deuxième pression ; **caractérisé par**
un second module de commande (122) qui est conçu afin de recevoir la vitesse de rotation et l'autre vitesse de rotation, de déterminer une troisième pression dans le troisième pneumatique (31) uniquement sur la base de la vitesse de rotation et de l'autre vitesse de rotation et de surveiller la troisième pression.

2. Dispositif (100) selon l'une quelconque des revendications précédentes,
**caractérisé en ce que**
le premier module de commande (121) et le second module de commande (122) sont réunis dans un dispositif de commande ou sont logés dans des dispositifs de commande séparés.

3. Dispositif (100) selon l'une quelconque des revendications précédentes,
**caractérisé en ce que**
le premier module de commande (121) est conçu afin de combiner la première pression et la deuxième pression en une pression combinée et de surveiller la pression combinée.

4. Dispositif (100) selon l'une quelconque des revendications précédentes,
**caractérisé en ce que**
le premier module de commande (121) et/ou le second module de commande (122) sont conçus afin d'effectuer la surveillance sur la base d'au moins l'un des éléments suivants :
- une valeur seuil,
- un taux de variation temporel
et d'émettre un avertissement en cas de dépassement de valeurs prédéterminées.

5. Véhicule utilitaire (1) comprenant
un essieu (2) en montage jumelé avec un premier pneumatique (11, 11') et un deuxième pneumatique (21, 21') ; et
un essieu (4) en montage simple avec un troisième pneumatique (31) et un autre troisième pneumatique (31'),
**caractérisé par**
le dispositif (100) selon l'une quelconque des revendications précédentes.

6. Véhicule utilitaire (1) selon la revendication 5,
**caractérisé en ce que**
l'essieu (2) en montage jumelé est un essieu moteur du véhicule utilitaire (1).

7. Véhicule utilitaire (1) selon la revendication 5 ou la revendication 6,
**caractérisé en ce que**
l'essieu (2) en montage simple est un essieu avant, un essieu de poussée ou un essieu suiveur du véhicule utilitaire (1).

8. Procédé de surveillance d'une pression pneumatique pour un véhicule utilitaire (1) qui présente un essieu (2) en montage jumelé avec un premier pneumatique (11, 11') et un deuxième pneumatique (21, 21') ainsi qu'un essieu (4) en montage simple avec un troisième pneumatique (31) et un autre troisième pneumatique (31'), avec les étapes suivantes :
une première mesure (S110), par un premier capteur de pression (111, 111'), d'une première pression dans le premier pneumatique (11, 11') ;
une deuxième mesure (S120), par un second capteur de pression (112, 112'), d'une deuxième pression dans le deuxième pneumatique (21, 21') ;
une troisième mesure (S130), par un capteur de vitesse de rotation (113, 113'), d'une vitesse de rotation du troisième pneumatique (31) et d'une autre vitesse de rotation de l'autre troisième pneumatique (31') ;
**caractérisé par** :
une détermination (S140), uniquement sur la base de la vitesse de rotation et de l'autre vitesse de rotation, d'une troisième pression ; et
une surveillance (S150) de la première pression, de la deuxième pression et de la troisième pression.
